# EUROPÄISCHE PATENTSCHRIFT

(11) **EP 2 705 201 B1**
(45) Veröffentlichungstag und Bekanntmachung des Hinweises auf die Patenterteilung: **08.06.2016**
(21) Anmeldenummer: 12714649.6
(22) Anmeldetag: 05.04.2012
(51) Int. Cl.: B60S 9/04, E04G 21/04, B66C 23/80, B66C 23/90

(54) **Autobetonpumpe mit Abstützvorrichtung**
Truck-mounted concrete pump comprising a bracing device
Pompe à béton automotrice équipée d'un dispositif d'appui

(30) Priorität: 05.05.2011 DE 102011075310
(43) Veröffentlichungstag der Anmeldung: 12.03.2014
(73) Patentinhaber: Putzmeister Engineering GmbH, 72631 Aichtal (DE)
(72) Erfinder: GÖGGELMANN, Gernot, 72622 Nürtingen (DE); PETZOLD, Wolf-Michael, 73773 Aichwald (DE); NEUBERT, Michael, 72631 Aichtal (DE)
(74) Vertreter: Wolf, Eckhard
(86) Internationale Anmeldenummer: PCT/EP2012/056259
(87) Internationale Veröffentlichungsnummer: WO 2012/150106

(56) Entgegenhaltungen:
- EP-A2- 1 849 931
- WO-A1-2010/003636
- DE-A1- 19 710 341
- DE-A1-102004 012 966
- DE-A1-102007 030 107
- US-B1- 6 351 696

## Beschreibung

Die Erfindung betrifft eine fahrbare Arbeitsmaschine, insbesondere eine Autobetonpumpe, mit einem ein Fahrwerk aufweisenden Fahrgestell und einer am Fahrgestell angeordneten, unter Anheben des Fahrgestells auf einer Unerlage abstützbaren Abstützvorrichtung. Das Fahrgestell umfasst die tragenden Teile der fahrbaren Arbeitsmaschine. Am Fahrgestell ist das Fahrwerk befestigt, das die Gesamtheit aller beweglichen Teile umfasst, die der Verbindung zur Fahrbahn dienen. Zum Fahrwerk gehören insbesondere Räder, Radaufhängungen, Federungen, Stoßdämpfer und dergleichen Fahrwerksteile. Es sind Arbeitsmaschinen dieser Art bekannt (DE-10 2004 012 966 A1), die mit ausfahrbaren Stützauslegern als Abstützvorrichtung versehen sind, die am Einsatzort die Standfestigkeit des Arbeitsgeräts verbessern sollen. Die Stützausleger haben dabei einerseits die Aufgabe, die Fahrzeugfederung zu eliminieren und die Fahrwerksteile vom Untergrund abzuheben. Hieraus lässt sich indirekt die Erkenntnis ableiten, dass die Fahrwerksteile beim Abstützvorgang ihre Lage und/oder ihre Neigung relativ zum Fahrgestell verändern. Zum anderen sollen die Stützausleger die Kippgefahr vermindern, die sich ergibt, wenn über einen Arbeitsausleger hohe Kippmomente entstehen. Um eine Kippsicherung zu gewährleisten, wurde im Falle einer Autobetonpumpe mit Verteilermast bereits eine Überwachungseinrichtung vorgeschlagen (Zeitschrift "Beton" 6/96, Seiten 362, 364). Dort werden die in vier hydraulisch betätigten Teleskopzylindern der Stützbeine herrschenden Drücke überwacht. Lässt der Druck in zwei Stützbeinzylindern nach, werden die Mastbewegungen und die Mastpumpe abgeschaltet. Untersuchungen haben jedoch gezeigt, dass Druckmessungen in den Teleskopzylindern der Stützbeine für eine zuverlässige Stützbeinüberwachung nicht ausreichen. Dies gilt vor allem dann, wenn einer der Stützbeinzylinder auf Anschlag gefahren ist. Auch dynamische Abstützeffekte lassen sich mit diesem Überwachungssystem nicht erfassen. Um diese Nachteile zu vermeiden, wurde bereits vorgeschlagen (DE-A 101 10 176), dass im Fußteil eines
jeden Stützbeins ein Kraftsensorpaar angeordnet ist. Jeder Kraftsensor ist dort in einem elektrischen Messkreis zur Abgabe einer stützlastabhängigen Messsignals angeordnet, wobei die Überwachungseinrichtung eine Auswerteelektronik umfasst, die in vorgegebenen Abtastzyklen mit den stützbeinbezogenen Stützlastmesswerten und zu deren Vergleich mit mindestens einem vorgegebenen stabilitätsbestimmenden Schwellenwert beaufschlagbar ist. Weiter ist es bei einer fahrbaren Arbeitsmaschine der eingangs angegebenen Art bekannt (DE-A 103 49 234), dass bei Stützauslegern, bei denen teleskopierbare Stützbeine mit einem auslegerfesten Teleskopglied mittels eines Anlenkbolzens an einem Stützbeinkasten angelenkt sind, der Anlenkbolzen als Messglied zur Bestimmung der Stützlast ausgebildet wird. In diesem Fall trägt der Anlenkbolzen mindestens einen Dehnmessstreifen zur Bestimmung der Bolzenbiegung oder der elastischen Scherverformung. Maschinen, die über eine Stützkraftüberwachung dieser Art verfügen, können aus der Summe ihrer ermittelten Gewichtslast das auf den Stützen lagernde Gesamtgewicht erfassen. Somit ist ein Rückschluss auf das angehobene Maschinengewicht und letztlich eine Aussage über den Aushub durch einen Vergleich mit einem hinterlegten Sollgewicht möglich. Bei Maschinen, die über keine Stützkraftüberwachung verfügen, gibt es bisher keine Vorkehrungen, die erkennen lassen, ob die Maschine in der Arbeitsposition ausreichend vom Untergrund abgehoben ist. Bei einer nur teilweise ausgehobenen Maschine fehlt der über die Bereifung in den Untergrund eingeleitete Gewichtsbetrag in der Standsicherheitsbilanz. Dies hat je nach Grad der Entlastung negative Folgen bis hin zum Kippen der Maschine.

Ausgehend hiervon wird gemäß der Erfindung vorgeschlagen, bei Arbeitsmaschinen technische Vorkehrungen zu treffen, die im Betriebszustand eine Aushubaussage ermöglichen.

Zur Lösung dieser Aufgabe werden die im Patentanspruch 1 angegebenen Merkmale vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, dass das Fahrwerk mindestens ein beim Abstützvorgang in seiner relativen Neigung gegenüber dem Fahrgestell veränderbares Fahrwerksteil aufweist. Um eine Aushubaussage beim Abstützvorgang zu ermöglichen, wird gemäß der Erfindung vorgeschlagen, dass an dem genannten Fahrwerksteil mindestens ein Neigungssensor angeordnet ist, dessen Ausgangssignal ein Ist-Maß für die Neigung des Fahrwerksteils relativ zu einem fahrzeugfesten oder erdfesten Bezugssystem bildet, und dass zusätzlich eine auf das Ausgangssignal des mindestens einen Neigungssensors ansprechende Auswerteeinheit zur Bestimmung einer Maßzahl für den Abstütz- oder Abhebezustand des Fahrgestells vorgesehen ist.

Vorteilhafterweise umfasst die Auswerteeinheit einen Vergleicher zur Durchführung eines Vergleichs des mindestens einen Ist-Maßes für die Neigung des Fahrwerksteils mit jeweils einem vorgegebenen Sollwert, dessen Ausgangssignal die Maßzahl für den Abstütz- oder Abhebezustand des Fahrgestells bildet.

Um die Zuverlässigkeit der Aushubaussage zu verbessern, ist jedem Neigungssensor ein redundanter Neigungs- oder Lagesensor zugeordnet.

Eine bevorzugte Ausgestaltung sieht vor, dass der Neigungssensor an einem beispielsweise als Lenker oder als Stabilisator ausgebildeten winkeländernden Fahrwerksteil angeordnet ist.

Mit den erfindungsgemäßen Maßnahmen wird erreicht, dass auch Arbeitsmaschinen ohne integriertem Standsicherheitssystem nachträglich mit Überwachungselementen ausgestattet werden können, die eine Verringerung des Gefährdungspotentials in Bezug auf eine nicht ordnungsgemäße Abstützung ergibt und dadurch Unfälle, die auf mangelhafte Standsicherheit zurückzuführen sind, vermeidet.

Im Folgenden wird die Erfindung anhand der Zeichnung näher erläutert. Es zeigen
- Fig. 1a und b: eine Seitenansicht einer Autobetonpumpe in Fahrstellung und in angehobener Arbeitsstellung;
- Fig. 2: eine Seitenansicht eines Fahrwerksteils mit vorderachsseitigem Stabilisator in abgesenkter und in Aushubstellung;
- Fig. 3a und b: eine Seitenansicht und eine Draufsicht eines Fahrwerksteils mit Hinterachsdreiecklenkern in abgesenkter und in Aushubstellung;
- Fig. 4: eine Seitenansicht eines Fahrwerkteils mit Entfernungssensoren im Bereich eines Radaufhängungselements und eines Stoßdämpfers.

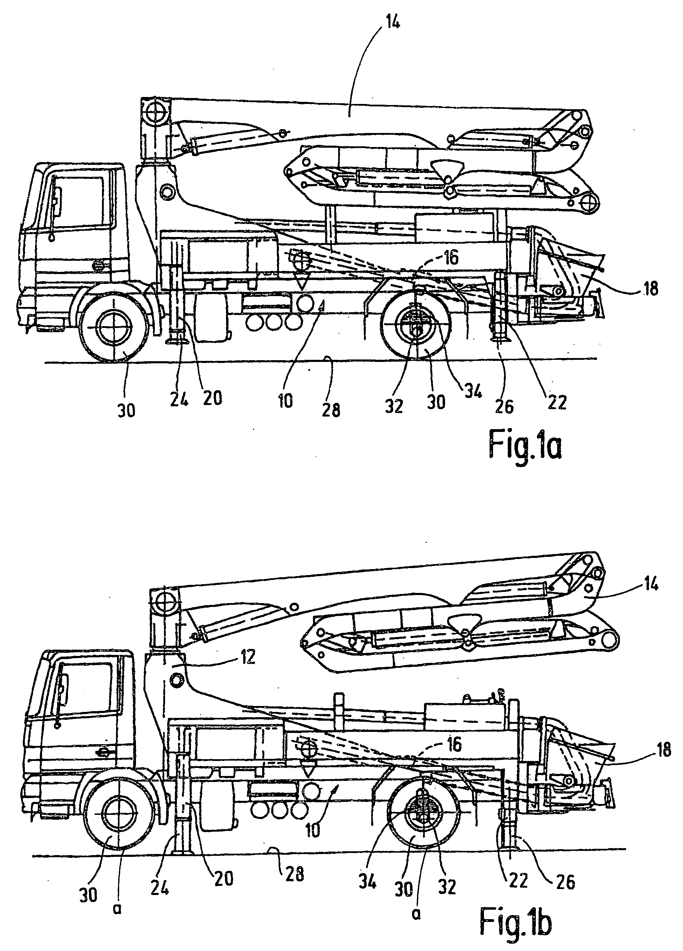

Die in Fig. 1 a in Fahrstellung und in Fig. 1 b in der angehobenen Arbeitsstellung dargestellte, als Autobetonpumpe ausgebildete fahrbare Arbeitsmaschine besteht im Wesentlichen aus einem zweiachsigen Fahrgestell 10, einem an einem vorderachsnahen Mastbock 12 um eine vertikale Achse drehbar gelagerten Betonverteilermast 14, einer Dickstoffpumpe 16 mit Materialaufgabebehälter 18 und einer aus zwei vorderen und zwei rückwärtigen Stützbeinen 20, 22 bestehenden Abstützvorrichtung. Die Stützbeine 20, 22 sind mit je einem nach unten ausfahrbaren Fußteil 24, 26 unter Anheben des Fahrgestells 10 und des daran befestigten Fahrwerks 11 auf dem Boden 28 abstützbar. Wie aus Fig. 1 a und 1 b zu ersehen ist, sind die Räder 30 der Hinterachse 32 unter Zwischenschaltung von durch Einwirkung der Achslast vorgespannten Radfedern 34 am Fahrgestell 10 aufgehängt. Die Radfedern 34 sind bei dem gezeigten Ausführungsbeispiel als geschichtete Blattfedern ausgebildet.

Eine Besonderheit der Erfindung besteht darin, dass an einem Fahrwerksteil 38, 38', das beim Abstützvorgang der Arbeitsmaschine über die Abstützvorrichtung 20, 22 in seiner relativen Neigung gegenüber dem Fahrgestell 10 verändert wird, ein Neigungssensor 36 angeordnet ist, dessen Ausgangssignal ein Ist-Maß für die Neigung des Fahrwerksteils relativ zu einem fahrzeugfesten oder erdfesten Bezugssystem bildet. Zusätzlich ist eine in der Zeichnung nicht dargestellte, auf das Ausgangssignal des mindestens einen Neigungssensors 36 ansprechende Auswerteeinheit vorgesehen, die dazu bestimmt und geeignet ist, eine Maßzahl für den Abstütz- oder Abhebezustand a des Fahrgestells zu bestimmen. Zu diesem Zweck weist die Auswerteeinheit einen Vergleicher zur Durchführung eines Vergleichs des mindestens einen Ist-Maßes für die Neigung des Fahrwerksteils mit jeweils einem vorgegebenen Sollwert auf, dessen Ausgangssignal die Maßzahl für den Abstütz- oder Abhebezustand a des Fahrgestells bildet.

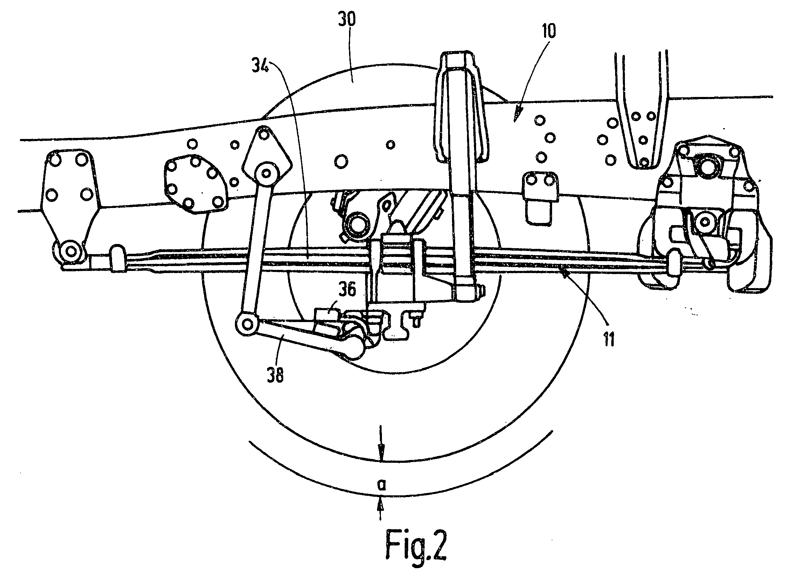

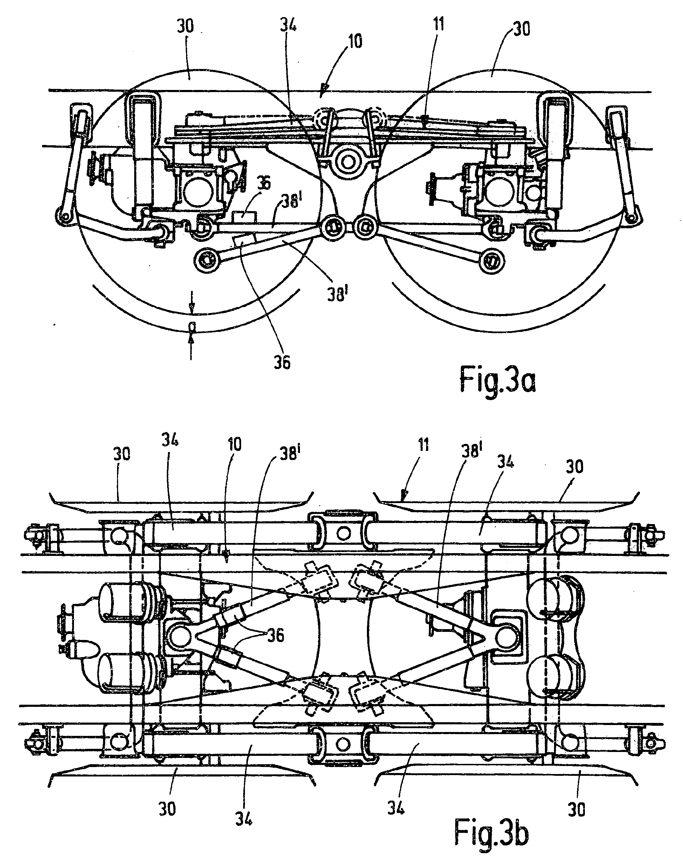

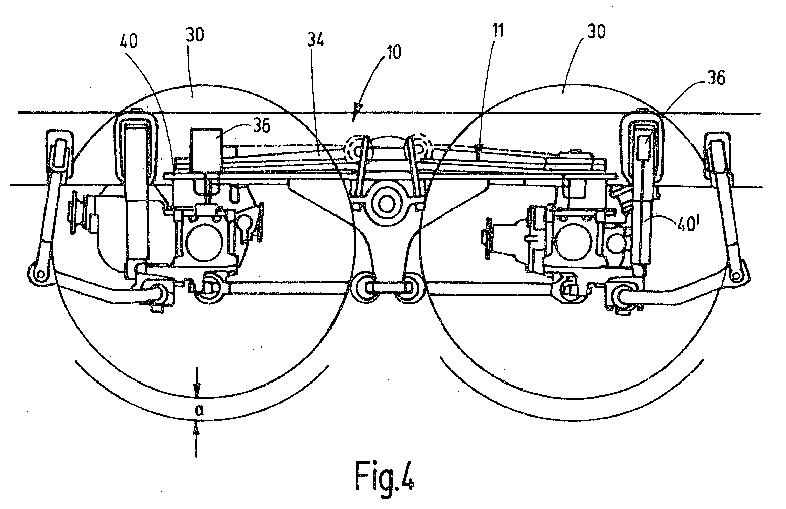

Bei dem in Fig. 2 gezeigten Ausführungsbeispiel ist der Neigungssensor 36 beispielhaft an dem vorderachsseitigen Stabilisator als Fahrwerksteil 38 angeordnet, während im Falle der Fig. 3a und 3b der mindestens eine Neigungssensor 36 an einem Hinterachs-Dreieckslenker als Fahrwerksteil 38' angeordnet ist. Weiter ist bei der in Fig. 4 gezeigten nicht beanspruchten Ausführungsform beispielhaft je ein als Entfernungssensor ausgebildeter Lagesensor 36 im Bereich eines als Radaufhängungselement 40 (links) und als Stoßdämpfer 40' (rechts) ausgebildetes entfernungsänderndes Fahrwerksteil angeordnet. Jedem der vorder- und rückseitigen Stützbeine 20, 22 ist dabei mindestens ein Lage- oder Neigungssensor 36 zugeordnet, wobei die Gesamtheit der Ausgangssignale der Lage- und Neigungssensoren 36 den Abstütz- oder Aushubzustand der Arbeitsmaschine definieren. Zur Erhöhung der Zuverlässigkeit sind jedem Stützbein 20, 22 der Abstützvorrichtung zwei redundante Lage- oder Neigungssensoren 36 zugeordnet, deren Ausgangssignale beispielsweise in einer Brückenschaltung der Auswerteeinheit zusammengeschaltet sein können. Grundsätzlich ist es möglich, auch einen als Entfernungssensor oder Näherungssensor ausgebildeten Lagesensor zu verwenden, der auf eine fahrgestellfeste oder erdfeste Bezugspartie ausgerichtet ist. Umgekehrt kann der Lagesensor auch an einer fahrgestellfesten Stelle angeordnet werden, die auf eine fahrwerksfeste oder erdfeste Bezugspartie ausgerichtet werden kann. Die nicht dargestellte fahrwerkfeste Bezugspartie oder Befestigungsstelle für den Lagesensor kann dabei an einem Stoßdämpfer oder an einem Radaufhängungselement angeordnet sein. Als Entfernungssensor wird zweckmäßig eine Ultraschallquelle oder eine Laserlichtquelle als Signalquelle verwendet.

Zusammenfassend ist folgendes festzuhalten: Die Erfindung bezieht sich auf eine fahrbare Arbeitsmaschine mit einem ein Fahrwerk 11 aufweisenden Fahrgestell 10 und einer am Fahrgestell 10 angeordneten unter Anhebung des Fahrgestells 10 auf einer Unterlage 28 abstützbaren Abstützvorrichtung. Die Erfindung geht ferner von der Erkenntnis aus, dass das Fahrwerk 11 mindestens ein beim Abstützvorgang in seiner relativen Neigung gegenüber dem Fahrgestell 10 veränderbares Fahrwerksteil 38, 38' aufweist. Erfindungsgemäß wird vorgeschlagen, dass an dem Fahrwerksteil 38, 38' mindestens ein Neigungssensor 36 angeordnet ist, dessen Ausgangssignal ein Ist-Maß für die Neigung des Fahrwerksteils 38, 38' relativ zu einem fahrgestellfesten oder erdfesten Bezugssystem bildet. Zusätzlich ist eine auf das Ausgangssignal des mindestens einen Neigungssensors ansprechende Auswerteeinheit vorgesehen. Zweckmäßig umfasst die Auswerteeinheit einen Vergleicher zur Durchführung eines Vergleichs des mindestens einen Ist-Maßes für die Neigung des Fahrwerksteils 38, 38' mit jeweils einem vorgegebenen Sollwert, dessen Ausgangssignal eine Maßzahl für den Abstütz- oder Abhebezustand des Fahrgestells 10 bildet.

### Bezugszeichenliste

- 10: Fahrgestell
- 11: Fahrwerk
- 12: Mastbock
- 14: Betonverteilermast
- 16: Dickstoffpumpe
- 18: Materialaufgabebehälter
- 20: vordere Stützbeine (Abstützvorrichtung)
- 22: rückwärtige Stützbeine (Abstützvorrichtung)
- 24: Fußteil
- 26: Fußteil
- 28: Boden (Unterlage)
- 30: Räder
- 32: Hinterachse
- 34: Radfedern
- 36: Lage- oder Neigungssensor
- 38, 38': Fahrwerksteil
- 40: Radaufhängungselement
- 40': Stoßdämpfer

## Patentansprüche

1. Autobetonpumpe mit einem ein Fahrwerk (11) aufweisenden Fahrgestell (10) und einer am Fahrgestell (10) angeordneten, unter Anheben des Fahrgestells (10) auf einer Unterlage (28) abstützbaren Abstützvorrichtung (20, 22), wobei die Abstützvorrichtung (20, 22) unter Abheben des Fahrwerks (11) auf der Unterlage (28) abstützbar ist, **dadurch gekennzeichnet, dass** das Fahrwerk (11) mindestens ein beim Abstützvorgang in seiner Neigung gegenüber dem Fahrgestell (10) veränderbares Fahrwerksteil (38, 38') aufweist, dass an dem Fahrwerksteil (38, 38') mindestens ein Neigungssensor (36) angeordnet ist, dessen Ausgangssignal ein Ist-Maß für die Neigung des Fahrwerksteils (38, 38') relativ zu einem fahrzeugfesten oder erdfesten Bezugssystem bildet, und dass zusätzlich eine auf das Ausgangssignal des mindestens einen Neigungssensors (36) ansprechende Auswerteeinheit zur Bestimmung einer Maßzahl für den Abstütz- oder Abhebezustand des Fahrgestells (10) oder des Fahrwerks (11) vorgesehen ist.

2. Autobetonpumpe nach Anspruch 1, **dadurch gekennzeichnet, dass** die Auswerteeinheit einen Vergleicher zur Durchführung eines Vergleichs des mindestens einen Ist-Maßes für die Neigung des Fahrwerksteils (38, 38') mit jeweils einem vorgegebenen Sollwert umfasst, dessen Ausgangssignal die Maßzahl für den Abstütz- oder Abhebezustand des Fahrgestells (10) bildet.

3. Autobetonpumpe nach Anspruch 1 oder 2, **dadurch gekennzeichnet, dass** der Neigungssensor (36) an einem vorzugsweise als Lenker oder als Stabilisator ausgebildeten winkeländernden Fahrwerksteil (38, 38') angeordnet ist.

4. Autobetonpumpe nach einem der Ansprüche 1 bis 3, **dadurch gekennzeichnet, dass** das Fahrgestell (10) eine hinterachsseitig angeordnete Betonpumpe mit Materialaufgabenbehälter sowie einen Betonverteilermast (14) und eine an die Betonpumpe (16) angeschlossene, über den Betonverteilermast (14) geführte Förderleitung trägt.

## Claims

1. Truck-mounted concrete pump with a chassis (10) comprising a running gear (11) and a bracing device (20, 22) disposed on the chassis (10) and supportable on a base (28) for raising the chassis (10), wherein the bracing device (20, 22) is disposed on the running gear (11) and supportable on a base (28) for raising the running gear (11), **characterized in that** the running gear (11) comprises at least one running gear part (38, 38') that is variable in its tilt to the chassis (10) during the bracing process, **in that** at least one tilt sensor (36) is disposed on the running gear part (38, 38'), whose output signal forms an actual measure for the tilt of the running gear part (38, 38') relative to a reference system that is fixed relative to the vehicle or relative to the Earth, and **in that** additionally an evaluation unit that is responsive to the output signal of the at least one tilt sensor (36) is provided to determine a numerical measure for the bracing state or the lifting state of the chassis (10) or of the running gear (11).

2. Truck-mounted concrete pump as claimed in claim 1, **characterized in that** the evaluation unit comprises a comparator for carrying out a comparison of the at least one actual measure for the tilt of the running gear part (38, 38') with a respective specified target value, whose output signal forms a measure for the bracing state or the lifting state of the chassis (10).

3. Truck-mounted concrete pump as claimed in claim 1 or 2, **characterized in that** the tilt sensor (36) is disposed on an angle-changing running gear part (38, 38') that is preferably in the form of a control element or of a stabilizer.

4. Truck-mounted concrete pump as claimed in one of claims 1 to 3, **characterized in that** the chassis (10) supports a concrete pump at the rear axle with a material output container and a concrete distribution boom (14) and a delivery line connected to the concrete pump (16) and led over the concrete distribution boom (14).

## Revendications

1. Pompe à béton automotrice avec un châssis (10) présentant un mécanisme de translation (11) et un dispositif d'appui (20, 22) agencé sur le châssis (10) pouvant s'appuyer sur un substrat (28) lors d'un soulèvement du châssis (10), dans lequel le dispositif d'appui (20, 22) peut s'appuyer sur le substrat (28) lors d'un relèvement du mécanisme de translation (11), **caractérisée en ce que** le mécanisme de translation (11) présente au moins une pièce de mécanisme de translation (38, 38') dont l'inclinaison par rapport au châssis (10) peut être modifiée lors d'une opération d'appui, au moins un capteur d'inclinaison (36), dont le signal de sortie constitue une mesure effective de l'inclinaison de la pièce de mécanisme de translation (38, 38') par rapport à un référentiel lié au véhicule ou à la terre, est agencé au niveau de la pièce de mécanisme de translation (38, 38'), et une unité d'évaluation réagissant au signal de sortie du au moins un capteur d'inclinaison (36) est en outre prévue pour déterminer une valeur de mesure de l'état d'appui ou de relèvement du châssis (10) ou du mécanisme de translation (11).

2. Pompe à béton automotrice selon la revendication 1, **caractérisée en ce que** l'unité d'évaluation comprend un comparateur pour réaliser une comparaison de la au moins une mesure effective de l'inclinaison de la pièce de mécanisme de translation (38, 38') avec respectivement une valeur de consigne prédéfinie, le signal de sortie dudit comparateur constituant la valeur de mesure de l'état d'appui ou de relèvement du châssis (10).

3. Pompe à béton automotrice selon la revendication 1 ou 2, **caractérisée en ce que** le capteur d'inclinaison (36) est agencé sur une pièce de mécanisme de translation (38, 38') modificatrice d'angle réalisée de manière préférée sous la forme d'une potence ou d'un stabilisateur.

4. Pompe à béton automotrice selon l'une quelconque des revendications 1 à 3, **caractérisée en ce que** le châssis (10) supporte une pompe à béton agencée côté essieu arrière avec des réservoirs de distribution de matériaux ainsi qu'une flèche de répartition de béton (14) et une conduite d'alimentation guidée par l'intermédiaire de la flèche de répartition de béton (14) raccordée à la pompe à béton (16).
